Europäisches Patentamt

European Patent Office

Office européen des brevets

(11) Veröffentlichungsnummer: **0 432 374 A1**

# (12) EUROPÄISCHE PATENTANMELDUNG

(21) Anmeldenummer: 90116958.1

(22) Anmeldetag: 04.09.90

(51) Int. Cl.5 **F02F 1/42, F02M 35.10**

(30) Priorität: 11.12.89 DE 3940838

(43) Veröffentlichungstag der Anmeldung:
19.06.91 Patentblatt 91/25

(84) Benannte Vertragsstaaten:
**DE ES FR GB IT NL SE**

(71) Anmelder: **Dr.Ing.h.c. F. Porsche Aktiengesellschaft**
**Porschestrasse 42**
**W-7000 Stuttgart 40(DE)**

(72) Erfinder: **Distelrath, Winfried, Dipl.-Ing. FH**
**Thaerstrasse 28**
**W-7000 Stuttgart 31(DE)**
Erfinder: **Zebli, Roland-Detlev, Dipl.-Ing.**
**Oeschelbronner Strasse 22**
**W-7131 Wurmberg(DE)**

(54) Ansaugkanal.

(57) Ein Ansaugkanal (3) in einem Zylinderkopf (2) einer Brennkraftmaschine weist ein definiertes Strömungsprofil auf, durch das die Strömungsgeschwindigkeit des Gasstroms kontinuierlich beschleunigt wird und zwar bis zu einem ersten Ansaugkanalabschnitt des Ansaugkanals (3), der - in Strömungsrichtung gesehen - vor einem Ventilschaft (6) liegt.

Danach wird in einem zweiten Ansaugkanalabschnitt die Strömungsgeschwindigkeit des Gasstroms kontinuierlich reduziert, wodurch eine geringere Anströmgeschwindigkeit des Ventils (4) erzielt wird. Dies bewirkt einen optimierten Liefergrad, der die Leistung und den Verbrauch der Brennkraftmaschine günstig beeinflußt.

FIG.1

# ANSAUGKANAL

Die Erfindung betrifft einen Ansaugkanal nach dem Oberbegriff des Patentanspruchs 1.

Bei einem bekannten Strömungskanal, DE-OS 35 08 763, ist das Strömungsprofil so gestaltet, daß es sich zum Ventilsitzring hin kontinuierlich verjüngt. Diese Gestaltung geht auf die physikalische Grundlage zurück, daß die geringsten Verluste in einem Strömungskanal bei ungehinderter Strömung dann auftreten, wenn der Querschnitt des Strömungskanals kontinuierlich verengt bzw. die Geschwindigkeit des Gasstroms kontinuierlich erhöht wird. Bei einem Strömungskanal mit einem Ventil ist aber eine ungehinderte Strömung nicht realisierbar, weil besagtes Ventil einen erheblichen Strömungswiderstand verursacht, der in Zusammenhang mit einem derartigen Strömungsprofil einen optimierten Betrieb der Brennkraftmaschine beeinträchtigt.

Außerdem ist ein Einlaßkanal bekannt, DE-PS 29 22 058, dessen stromabwärts vor dem Ventil liegender Kanalabschnitt kreisförmig ausgebildet ist, sich verjüngt und in einen als Wirbel-Einlaßkammer ausgebildeten Napf mündet. Der Napf ist asymmetrisch zum Kanalabschnitt angeordnet, wobei in letzteren benachbart dem Ventil eine Hülse eingesetzt ist. Dieser Ausführung haftet zum einen der Nachteil an, daß die Hülse durch einen Stoß in Strömungsrichtung Verluste verursacht. Andererseits bildet die dem Ventil benachbarte Begrenzung der Hülse eine Abrißkante, die ebenfalls Strömungsverluste hervorruft; zusätzliche Strömungsverluste ergeben sich bei dieser Ausführung durch die Wirbelbildung im Napf.

Aufgabe der Erfindung ist es, einen Ansaugkanal in einem Zylinderkopf einer Brennkraftmaschine so auszubilden, daß die Strömungsgeschwindigkeit des Gasstroms dem durch das Einlaßventil hervorgerufenen Widerstand in Richtung bessere Brennkraftmaschinen-Betriebseigenschaften, beispielsweise durch optimierte Füllung, Rechnung trägt.

Diese Aufgabe wird durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß der Gasstrom in den Ansaugkanalabschnitten des Zylinderkopfs einen optimierten Strömungsgeschwindigkeitsverlauf aufweist, wodurch der Gasstrom bis zum Querschnittsübergangsbereich beschleunigt und danach verzögert wird. Letzteres bewirkt eine Reduktion des Strömungswiderstands, wodurch der Liefergrad der Brennkraftmaschine verbessert wird. Dies wiederum wirkt sich leistungserhöhend und verbrauchsreduzierend aus.

In der Zeichnung sind Ausführungsbeispiele der Erfindung dargestellt, die nachstehend näher beschrieben sind.

Es zeigt

Fig. 1 einen Teilquerschnitt einer Brennkraftmaschine im Bereich einer Ansauganlage und eines Zylinderkopfs,

Fig. 2 ein Diagramm, aus dem der Verlauf der Strömungsgeschwindigkeit eines Gasstroms in einer Ansauganlage hervorgeht,

Fig. 3 eine schematische Ansicht in Pfeilrichtung A der Fig. 1,

Fig. 4 eine Ansicht entsprechend Fig. 3 einer weiteren Ausführungsform.

Die Brennkraftmaschine 1 umfaßt in dem dargestellten Bereich einen Zylinderkopf 2 mit einem Ansaugkanal 3, der sich zwischen einer ersten aufrechten Begrenzungswand WA und einer zweiten horizontalen Begrenzungswand WH teils bogenförmig erstreckt.

Ein von einer nicht gezeigten Nockenwelle betätigtes Ventil 4 ist am Ende des Ansaugkanals 3 vorgesehen, das einen Ventilschaft 6 und einen Ventilteller 7 aufweist; der Ventilteller 7 arbeitet mit einem Ventilsitz 8 zusammen. Der Ventilschaft 6 ist axial beweglich in einer Ventilführung 9 angeordnet, die ihrerseits in einer Bohrung 10 im Zylinderkopf 2 ruht. Der Ventilschaft 6 ist örtlich, und zwar im Bereich einer Krümmung 11 des Ansaugkanals 3 einem Gasstrom ausgesetzt, der durch das Ventil 4 gesteuert wird. Ist das Ventil 4 geöffnet, gelangt der Gasstrom in einen Brennraum 12.

Der Ansaugkanal 3 mit kreisrundem Querschnitt weist folgendes Strömungsprofil auf: über einen ersten Ansaugkanalabschnitt AK I des Ansaugkanals 3 verjüngt sich sein Querschnitt gleichmäßig konisch, und zwar stromabwärts - Strömungsrichtung S - bis zu einem Querschnittsübergangsbereich 13, der - ebenfalls in Strömungsrichtung S gesehen - relativ kurz vor dem Ventilschaft 6 liegt. Nach dem Querschnittsübergangsbereich 13 in einem zweiten Ansaugkanalabschnitt AK II erweitert sich der Querschnitt wiederum gleichmäßig und konisch. Die Querschnittsverjüngung wird durch Q 1 > Q 2 und die Querschnittserweiterung durch Q 3 < Q 4 definiert. Die Querschnittserweiterung Q 1 > Q 2 beträgt je nach Art und Größe der Brennkraftmaschine zwischen 18 und 24 %.

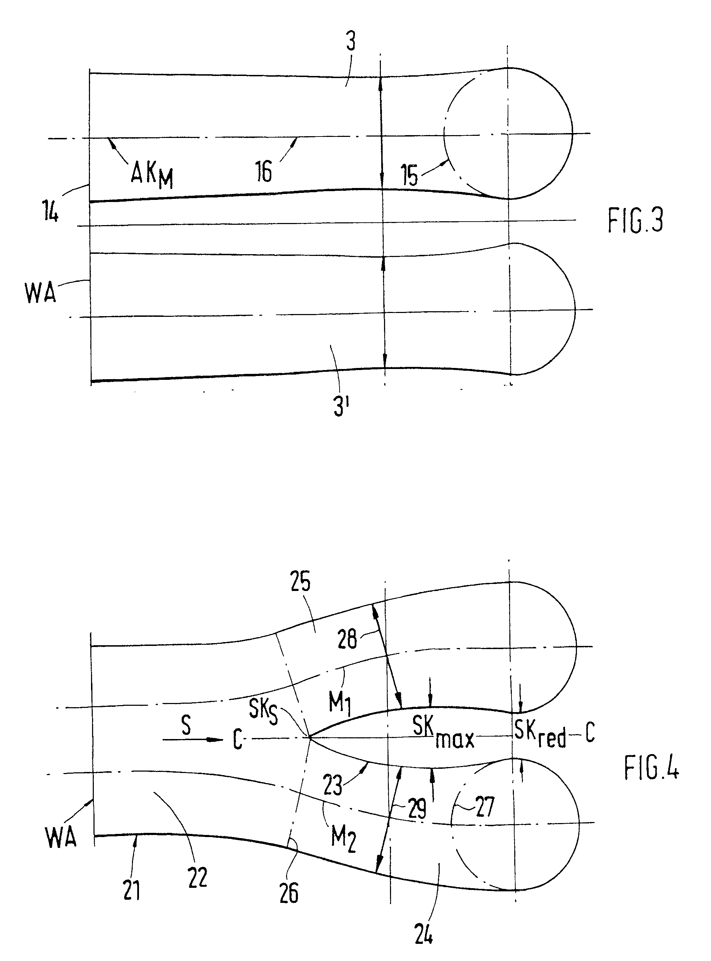

Darüber hinaus umfaßt der Ansaugkanal 3 eine Eintrittsöffnung 14 und eine Austrittsöffnung 15. Die Zentren Z 1 und Z 2 der Eintrittsöffnung 14 und Austrittsöffnung 15 liegen - von oben auf den Zylinderkopf 2 gesehen (Fig. 3) - auf einer Geraden 16, die eine Mittellängsebene AK$_M$ des Ansaugkanals 3 einschließt.

Außerdem ist die Oberfläche OF des Ansaugkanals 3 zur Verbesserung des Strömungsverhaltens des Gasstroms glatt bearbeitet. Hierzu dient beispielsweise eine NC-Maschine, wobei der erste Ansaugkanalabschnitt AK I zwischen Eintrittsöffnung 14 und Querschnittsübergangsbereich 12 von der ersten Begrenzungswand WA aus bearbeitet wird; der zweite Ansaugkanalabschnitt AK II von der zweiten Begrenzungswand WH aus.

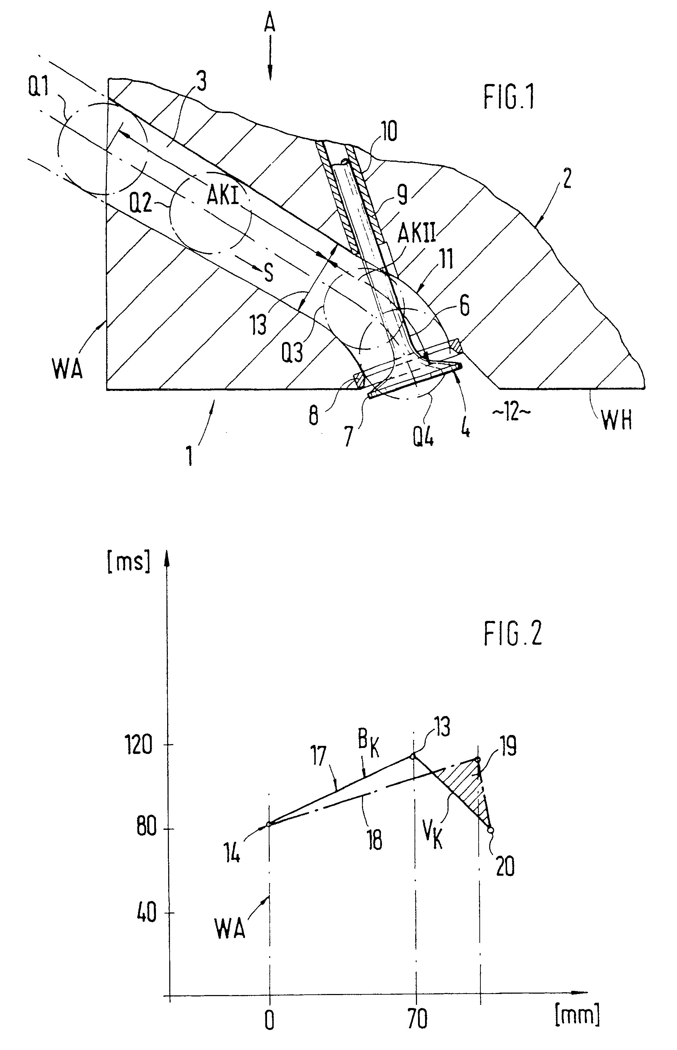

Gemäß Fig. 2 ist der Verlauf der Strömungsgeschwindigkeit des Gasstroms im Ansaugkanal 3 dargestellt. Dabei ist auf der Ordinate die Geschwindigkeit in m/s und auf der Abszisse die Länge des Ansaugkanals in mm aufgetragen. Die durchgezogene Linie 17 gibt die kontinuierliche Beschleunigung B$_K$ bis zum Querschnittsübergangsbereich 13 und danach die kontinuierliche Verzögerung V$_K$ des Gasstroms wieder. Die strichpunktierte Linie 18 gibt den Verlauf der Strömungsgeschwindigkeit des Gasstroms nach dem Stand der Technik wieder. Diese Gegenüberstellung macht deutlich, daß der Gasstrom gemäß Linie 18 bis kurz vor dem engsten Querschnitt im Bereich des Ventilsitzrings beschleunigt wird. Das schraffierte Dreieck 19 stellt die Reduktion des Strömungswiderstands dar; bei 20 hat der Gasstrom Ventilspaltgeschwindigkeit. Je nach Konzept der Brennkraftmaschine wird das Strömungsprofil entlang der Ordinate lagemäßig definiert. Die Länge des Ansaugkanals 3 (zwischen 60 und 120 mm) ist von der Geometrie des Zylinderkopfs 2 abhängig.

Aus Fig. 3 gehen zwei parallel zueinander verlaufende Ansaugkanäle 3, 3' hervor. Beide Ansaugkanäle 3, 3' sind über ihre gesamte Länge im wesentlichen getrennt voneinander und konisch ausgebildet. Außerdem weisen sie prinzipgleiche Strömungsprofile auf. Diese Ausführung eignet sich für eine Brennkraftmaschine mit wenigstens zwei Einlaßventilen pro Zylinder, die im Zylinderkopf angeordnet und von beispielsweise zwei Nockenwellen betätigt werden.

In Fig. 4 ist ebenfalls ein Ansaugkanal 21 für eine Brennkraftmaschine mit zwei Einlaßventilen pro Zylinder dargestellt. Der Ansaugkanal 21 weist tendentiell ein Strömungsprofil wie in Fig. 2 dargestellt auf. Jedoch ist er in strömungsrichtung S gesehen zunächst ein Einzelkanal 22, der dann durch eine Trennwand 23 in zwei getrennte Kanalbereiche 24, 25 aufgeteilt ist, die Hosenform aufweisend, zu den Einlaßventilen führen. Die Trennwand 23 beginnt stromabwärts - Strömungsrichtung S - vor dem Ventilschaft 10 und ist als eine Art Strömungskörper mit symmetrisch stromlinienförmigem Profil ausgebildet. Er beginnt mit einer dem Gasstrom entgegengesetzten Spitze SK$_S$ - sie ist durch entsprechende Herstellungsverfahren nach Art einer Schneide ausgebildet - und erweitert sich kontinuierlich beiderseits einer Quermittelebene C-C auf eine maximale Breite SK$_{max}$, von wo aus sich das Profil auf eine reduzierte Breite SK$_{red}$ verjüngt. Der Strömungskörper, namentlich die Zusammenhänge SK$_{max}$ und SK$_{red}$ können unter Berücksichtigung konstruktiver Gegebenheiten und minimaler Reibungs- und Druckverluste empirisch und/oder rechnerisch definiert werden.

Die Mittellinien M$_1$ und M$_2$ der im wesentlichen kreisrunden Kanalbereiche 24, 25 verlaufen - in Längsrichtung Ansaugkanal 22 oder Strömungsrichtung S gesehen - leicht bogenförmig (bauartbedingt), d.h., zwischen den Eingangsöffnungen 267 und den Austrittsöffnungen 27 mäßig desachsiert.

Schließlich sind bei dieser Ansauggestaltung Querschnittsübergangsbereiche 28, 29 in den Kanalbereichen 24, 23 vorgesehen. Bis zu den Querschnittsübergangsbereichen 28, 29 - erster Ansaugkanalbereich - die stromabwärts - Strömungsrichtung S - relativ kurz vor dem Ventilschaft liegen, wird der Gasstrom beschleunigt und danach - im zweiten Ansaugkanalbereich - verzögert: letzteres wird durch die gleichmäßige Querschnittserweiterung nach diesen Querschnittsübergangsbereichen erzielt.

## Ansprüche

1. Ansaugkanal in einem Zylinderkopf einer Brennkraftmaschine, worin ein Gasstrom mittels eines Ventils gesteuert wird, das einen mit einem Ventilsitz zusammenwirkenden Ventilteller und einen damit verbundenen, in einer Ventilführung axial beweglich gelagerten Ventilschaft umfaßt, wobei der Ventilschaft benachbart dem Ventilsitzring derart im Ansaugkanal angeordnet ist, daß er dem Gasstrom ausgesetzt ist, **dadurch gekennzeichnet, daß** der Ansaugkanal (3) stromabwärts - Strömungsrichtung S - mit einem definierten Strömungsprofil versehen ist, das in einem ersten Ansaugkanalabschnitt (AK I) bis zu einem relativ kurz vor dem Ventilschaft (10) liegenden Querschnittsübergangsbereich (13) eine gleichmäßige Querschnittsverengung (Q 1 > Q 2) und danach in einem zweiten Ansaugkanalabschnitt (AK II) eine gleichmäßige Querschnittserweiterung (Q 3 < Q 4) aufweist.

2. Ansaugkanal nach Anspruch 1. **dadurch gekennzeichnet,** daß die Eintrittsöffnung (14) und die Austrittsöffnung (15) des Ansaugkanals (3) kreisrund sind, wobei die Zentren (Z 1 und Z 2) der Eintrittsöffnung und der Austrittsöffnung auf einer Geraden (16) liegen, die die Mittellängsebene (AK$_M$) des Ansaugkanals (3) einschließt.

3. Ansaugkanal nach Anspruch 1, **dadurch gekennzeichnet,** daß die Querschnittsverengung (Q 1 > Q 2) des ersten Ansaugkanalabschnitts (AK I) bis zum Querschnittsübergangsbereich (13) konisch ist.

4. Ansaugkanal nach Anspruch 3, **dadurch gekennzeichnet,** daß die Querschnittsverengung (Q 1 > Q 2) zwischen 18 und 24 % beträgt.

5. Ansaugkanal nach einem oder mehreren der vorangehenden Ansprüche in Verbindung mit einer Brennkraftmaschine, deren Zylinderkopf zumindest zwei Einlaßventile pro Zylinder umfaßt, die den Gasstrom in dem jeweils getrennten Ansaugkanal des Zylinderkopfs steuern, **dadurch gekennzeichnet,** daß die Ansaugkanäle (3, 3') prinzipgleiche Strömungsprofile aufweisen.

6. Ansaugkanal nach einem oder mehreren der vorangehenden Ansprüche, in Verbindung mit einer Brennkraftmaschine, deren Zylinderkopf zumindst zwei Einlaßventile pro Zylinder umfaßt, die den Gasstrom im Ansaugkanal steuern, wobei stromabwärts - Strömungsrichtung S - der Ansaugkanal zunächst ein Einzelkanal ist und danach durch eine vor dem Ventilschaft beginnende Trennwand in zwei getrennte Ka-nalbereiche aufgeteilt ist, **dadurch** gekenn-zeichnet, daß sich das Strömungsprofil entlang des Einzelkanals (22) und der Kanalbereiche (24, 25) erstreckt.

7. Ansaugkanal nach Anspruch 5, **dadurch gekennzeichnet,** daß die Trennwand (23) zwischen den Kanalbereichen (24, 25) als Strö-mungskörper mit symmetrisch stromlinienför-migem Profil ausgebildet ist.

8. Ansaugkanal nach Anspruch 6, **dadurch gekennzeichnet,** daß der Strömungskörper von einer dem Gasstrom entgegengesetzten Spitze ($SK_S$) aus sich über einen ersten Körperab-schnitt ($SK_1$) erweitert, von wo aus sich das Profil auf eine reduzierte Breite ($SK_{red}$) verjüngt.

9. Ansaugkanal nach den Ansprüchen 6 und 7, **dadurch gekennzeichnet,** daß die dem Gasstrom entgegengesetzte Spitze ($SK_S$) nach Art einer Schneide ausgebildet ist.

10. Ansaugkanal nach Anspruch 1, dessen Oberfläche durch Bearbeiten glatt ist, **dadurch ge-kennzeichnet,** daß der erste Ansaugkanalab-schnitt (AK I) von der ersten Begrenzungswand (WA) und der zweite Ansaugkanalabschnitt (AK II) von der zweiten Begrenzungswand (WH) aus bearbeitet wird.

11. Verfahren zur Beeinflußung der Strömungsgeschwindigkeit des Gasstroms in einem Ansaugkanal nach Anspruch 1, **dadurch ge-kennzeichnet,** daß die Strömungsgeschwin-digkeit des Gasstroms im ersten Ansaugkanalabschnitt (AK I) bis zu dem Querschnittsübergangsbereich (12) kontinuierlich erhöht und danach im zweiten Ansaugkanalabschnitt (AK II) kontinuierlich verringert wird.

FIG.1

FIG.2

FIG.3

FIG.4

Europäisches
Patentamt

**EUROPÄISCHER
RECHERCHENBERICHT**

Nummer der Anmeldung

**EP 90 11 6958**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 270 733  (MWM) <br> * Spalte 3, Zeile 13 - Spalte 3, Zeile 72; Figuren 1-5 * <br> — — — | 1,2 | F 02 F <br> 1 42 <br> F 02 M 35 10 |
| A | GB-A-2 056 553  (RICARDO) <br> * Seite 2, Zeile 79 - Seite 3, Zeile 12; Figur 1 * <br> — — — | 1,2 | |
| A | US-A-2 958 313  (TEXACO) <br> * Spalte 3, Zeile 30 - Spalte 4, Zeile 16; Figur 2a * <br> — — — | 1 | |
| P,Y | DE-C-3 924 543  (PORSCHE) <br> * das ganze Dokument * <br> — — — | 3-11 | |
| Y | GB-A-2 172 658  (DAIMLER BENZ) <br> * das ganze Dokument * <br> — — — — | 3-11 | |
| | | | **RECHERCHIERTE SACHGEBIETE (Int. Cl.5)** <br><br> F 02 F <br> F 02 M |

Der vorliegende Recherchenbericht wurde für alle Patentansprüche erstellt

| Recherchenort | Abschlußdatum der Recherche | Prüfer |
|---|---|---|
| Den Haag | 15 Januar 91 | WASSENAAR G. |